# EUROPEAN PATENT APPLICATION

(11) **EP 4 183 844 A1**
(43) Date of publication of application: **24.05.2023**
(21) Application number: 22201475.5
(22) Date of filing: 13.10.2022
(51) Int. Cl.: C09D 5/16, C09D 7/61, C09D 7/40, A47L 15/00, A47L 15/42, D06F 25/00, D06F 35/00, D06F 37/30

(54) **FUNCTIONALIZED SURFACES FOR HOME APPLIANCES**

(30) Priority: 18.11.2021 US 202163280770 P; 29.09.2022 US 202217956007
(71) Applicant: Whirlpool Corporation, Benton Harbor, MI 49022 (US)
(72) Inventor: Khizar, Muhammad, 21024 Cassinetta di Biandronno (VA) (IT)
(74) Representative: Spina, Alessandro

(57) **Abstract**

A home appliance (100), such as a laundry appliance, includes a component assembly (150) with a sensor and a sensor-controlled component for operating the appliance (100), and a cover (170) for housing the component assembly (150) therein. The cover (170) has an outer surface (175) and an inner surface. The cover (170) includes a functionalized superhydrophobic multi-layer coating on at least one of the outer surface (175) and inner surface. The functionalized superhydrophobic coating prevents moisture from entering the component assembly (150) and attacking sensors housed therein, and has a water contact angle thereon of at least 145 degrees.

## Description

### FIELD OF DISCLOSURE

The present application is directed to a home appliance, and more particularly, to coating materials for components of the home appliance.

### DESCRIPTION OF RELATED ART

Home appliances, such as laundry appliances, include various components such as user interfaces for setting programs, motors for agitating items loaded in the appliance according to the programs, and a variety of sensors for controlling operation of the programs. Laundry appliances, such as clothes washers, dryers, and combination washer-dryers typically include a rotating drum (or basket) for receiving items to be laundered. The drum is housed in an appliance body, where the body has a door for providing access to the drum. The drum is rotated by a motor, to tumble the clothing items within the drum. Kitchen appliances, such as dishwashers, typically include a chamber accessible by a door for loading items to be washed. The home appliance may include a controller that operates the appliance based on a selection by a user at a user interface from numerous pre-programmed cycles. Each pre-programmed cycle may have various adjustable parameters (e.g., time, temperature, etc.) which can be adjusted by the user at the user interface.

Upon loading of items, and selection of the pre-programmed cycle (and any adjustments therein), the home appliance operates to treat the items based on the type of appliance *(i.e.,* a washer runs the selected wash cycle, the dryer runs the selected dry cycle, the dishwasher runs a full-load cycle, etc.). The operation of the home appliance during the program typically includes operating a pump to provide water *(i.e.,* heated or unheated water) to the drum or chamber of the home appliance.

### SUMMARY

According to one or more embodiments, a home appliance includes a motor assembly with a sensor and a sensor-controlled motor for operating the appliance (*e.g*., rotating the drum of the laundry appliance), and a cover for the motor assembly having an outer surface and an inner surface. The cover includes a functionalized superhydrophobic multi-layer coating on the outer surface. The cover may also include, in some embodiments, a functionalized superhydrophobic multi-layer coating on the inner surface. The functionalized superhydrophobic coating prevents moisture from entering the component assembly and attacking sensors housed therein.

According to one or more embodiments, a home appliance includes a component assembly including a sensor and a sensor-driven component, and a cover forming a housing for the component assembly, the cover having an inner surface facing the sensor and the sensor-driven component, and an outer surface opposite to the inner surface. The home appliance also includes a functionalized superhydrophobic coating on the outer surface to prevent moisture from attacking components within the component assembly. The functionalized superhydrophobic coating has a water contact angle thereon of at least 145 degrees.

In at least one embodiment, the home appliance may further include a second functionalized superhydrophobic coating on the inner surface. In one or more embodiments, the functionalized superhydrophobic coating may include a polymer matrix and a functionalized nanomaterial dispersed therein. In at least one further embodiment, the functionalized nanomaterial may be a surface-modified nanomaterial to enhance absorption and/or stretchability of the functionalized superhydrophobic coating. In at least one other further embodiment, the functionalized nanomaterial may be a carbon based or graphene nanomaterial. In certain embodiments, the functionalized nanomaterial may have a spherical, tubular, hollow, cylindrical, flake, flat, or irregular shaped structure. In at least one embodiment, the functionalized nanomaterial includes particles may have an average size, taken along a largest dimension, of 1 to 500 nm. According to one or more embodiments, the component assembly may be a motor assembly or a pump assembly. In one or more embodiments, the functionalized superhydrophobic coating may include one or more layers of the functionalized superhydrophobic coating. In at least one embodiment, the functionalized superhydrophobic coating may be less than 5 mm thick. In other embodiments, the functionalized superhydrophobic coating is a thin film coating having a thickness of 3 nm to 450 nm.

According to one or more embodiments, a home appliance includes a component assembly including a sensor and a sensor-driven component, and a cover forming a housing for the component assembly. The cover has an inner surface facing the sensor and the sensor-driven component, and an outer surface opposite to the inner surface. The home appliance also includes a functionalized superhydrophobic coating having a functionalized nanomaterial dispersed in a polymer matrix on at least one of the inner surface and the outer surface to prevent moisture from attacking components within the component assembly. The functionalized superhydrophobic coating has a water contact angle thereon of at least 145 degrees.

In at least one embodiment, the functionalized superhydrophobic coating may be on both the inner surface and the outer surface. In one or more embodiments, the functionalized nanomaterial may be a surface-modified nanomaterial to enhance absorption and/or stretchability of the functionalized superhydrophobic coating. In at least one embodiment, the functionalized nanomaterial may be a carbon based or graphene nanomaterial which include particles having an average size, taken along a largest dimension, of 1 to 500 nm.

According to one or more embodiments, a method includes providing a component assembly including a sensor and a sensor-driven component, and a cover forming a housing for the component assembly, and applying a functionalized superhydrophobic coating on at least one of an outer surface of the cover and an inner surface of the cover to prevent moisture from attacking components within the component assembly. The functionalized superhydrophobic coating includes a polymer matrix and a functionalized nanomaterial dispersed therein, and forms a coated surface having a water contact angle thereon of at least 145 degrees.

In at least one embodiment, the applying may include applying one or more layers of the functionalized superhydrophobic coating. In one or more embodiments, the method may further include functionalizing a superhydrophobic coating including a polymer matrix and a nanomaterial component to form the functionalized superhydrophobic coating. In at least one further embodiment, the functionalizing may be via surface modification of the nanomaterial component. In at least one embodiment, the applying may be via spray coating or dip coating.

### BRIEF DESCRIPTION OF THE DRAWINGS

FIG. 1 is a perspective view of a laundry appliance, according to an embodiment;
FIG. 2 is a perspective view of the components of the laundry appliance of FIG. 1, according to an embodiment;
FIG. 3A-C illustrate schematic views of an uncoated cover, according to an example;
FIGS. 4A-D illustrate schematic views of a coated cover, according to another example; and
FIGS. 5A-C illustrate schematic views of a coated cover, according to yet another example.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Home appliances, like laundry and kitchen appliances, are typically used for cleaning various items based on user input at the appliance. These home appliances for cleaning include dishwashers and various laundry appliances, and generally include a number of components for providing water to and from the treatment chamber and/or drum for cleaning the items loaded therein. Laundry appliances, such as washers and dryers, are often used together to wash and dry clothing, linens, towels, and other items, collectively "laundry items." Washers are appliances that use water, along with detergent, to clean the items under agitation (*e.g*., rotation). After washing, the wet laundry items are sometimes transferred to the dryer. Dryers use air to remove moisture from the clean laundry items which came from the washer, or from other damp or wet laundry items. Dryers include an air supply and an exhaust for supplying air to a drum to aid in the drying of the laundry items within the drum of the laundry appliance. In various examples, the air enters the body of the dryer, passes over a heating element to warm the air, and the warm air is provided into the drum (sometimes referred to as a tumbler). The air circulates through the drum as the drum is rotated, such that the laundry items are dried. The air then exits the drum through an exhaust duct, which may include a lint screen to remove lint or other debris from the airflow. The air flow through the dryer is supplied and aided by a blower system to force the air out the dryer and pull new air in to be heated. Laundry appliances also include combination washer-dryers that combine the functions of the conventional washer and dryer into a single appliance, without requiring transferring of the laundry items.

Home appliances that have a cleaning capability with water being provided to the chamber/drum also typically include various component assemblies to move the water into and from the chamber (*e.g.*, pumps) and motors for rotating the drum, which include sensors for detecting moisture in the chamber/drum for providing humidity information to the controller for operating the appliance based on the user-selected program and determining whether the program is complete. These component assemblies may be subject to moisture attacks where moisture approaches the sensors of the component assembly, which results in the controller operating the pump and/or motor beyond the necessary time or program.

According to one or more embodiments, the home appliance includes a component assembly with a sensor and a sensor-controlled component for operating the appliance (*e.g.,* a motor assembly rotating the drum of the laundry appliance or a pump assembly for supplying water to the drum), and a cover for the component assembly having an outer surface and an inner surface. The cover includes a functionalized superhydrophobic coating on the outer surface. In certain embodiments, the cover may also include a second functionalized superhydrophobic multi-layer coating on the inner surface. The functionalized superhydrophobic coating may be formed using one or more layers of the coating to form an overall coating. Although hereinafter the home appliance may be referred to as a laundry appliance, this is not intended to be limiting, and other home appliances, such as those having sensors or components sensitive to moisture, such as dishwashers and the like, are also contemplated, and discussion of a laundry appliance is provided as one example of an appliance. Moreover, although the motor assembly is described as having a sensor-controlled motor, the motor assembly may also include a pump, such that the cover is a pump cover, and discussion of a cover with respect to a motor assembly is not intended to be limiting. As such, in one or more embodiments, a cover for a sensor-controlled component assembly (*e.g*., a motor or pump of a home appliance), includes a functionalized superhydrophobic coating thereon to prevent moisture from entering the component assembly and attacking sensors housed therein.

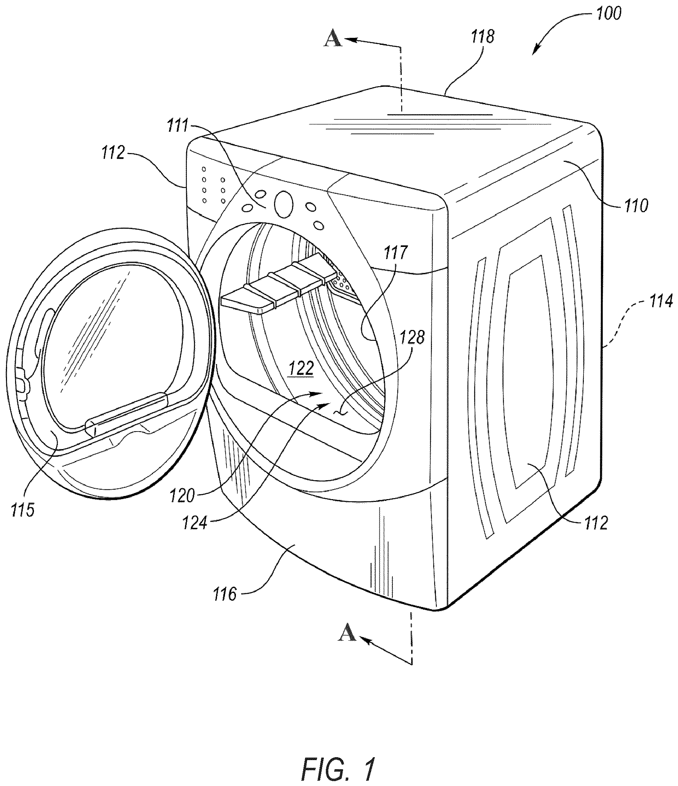

Referring to FIG. 1, a laundry appliance 100 is shown as an example for discussing the component assembly of various embodiments. The laundry appliance 100 is a combination washer-dryer that performs both the functions of a conventional washer and a conventional dryer, however the component assembly and features described herein may be applicable to conventional washers and dryers as well as kitchen appliances such as dishwashers as previously noted, and depiction of a combination washer-dryer is not intended to be limiting. As such, laundry appliance and home appliance may be used interchangeably. The laundry appliance 100 includes an outer appliance body 110 defining the outer cabinet structure of the laundry appliance 100. The body 110 is constructed of side walls 112, rear wall 114, front surface 116, and top surface 118. The body 110 further includes a control panel 111 for receiving user-input for a variety of pre-programmed programs for instructing a controller for operating the laundry appliance 100. Although shown on the front surface 116 in FIG. 1, the control panel 111 may be located in any convenient position such that a user can select the operation cycles of the laundry appliance (*e.g.*, on top surface 118 or on a flange extending from the top surface 118 or the front surface 116). The laundry appliance 100 further includes a door 115 for providing access inside the cavity defined by the body 110 via an opening 117 in the front surface 116. The door 115 may be hinged and mounted to the front surface 116, such that it can be engaged with the body 110 to seal the cavity at the opening 117. The laundry appliance 100 further includes a drum 120 for receiving laundry items (*e.g.*, clothing, towels, linens, and the like) in the cavity of the body 110, although not shown in FIG. 1. The drum 120 defines an interior receptacle 122 where the laundry items are placed, with the receptacle 122 being accessible via the opening 117, such that a user can open the door 115 to place the laundry items within the receptacle 122. When the door 115 is closed, the interior receptacle 122 is sealed from the external environment by the door 115 to reduce leaks (*e.g.,* air or water) from the opening 117 during a laundry cycle based on the selection at the control panel 111. A portion of the door 115 may be sufficiently transparent such that the laundry items within the receptacle 122 can be seen through the door 115.

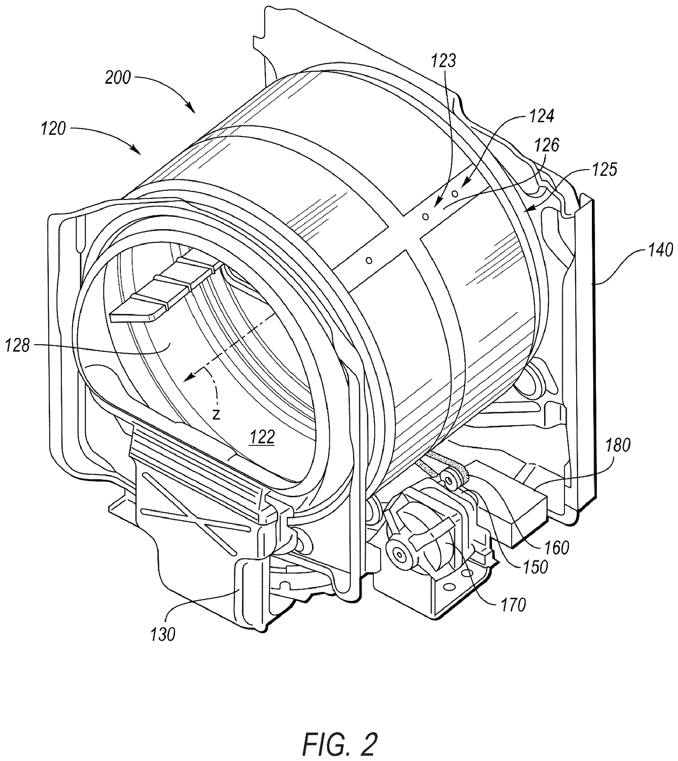

Referring to FIG. 2, the laundry appliance 100 is shown with the outer body 110 removed. As can be more clearly seen in FIG. 2, the drum 120 is constructed of a drum wall 124 defining an outer surface 126 and an inner surface 128 defining the receptacle 122 for the laundry items. The drum 120 is generally cylindrical in shape, with the drum wall 124 including a curved portion 123 such that receptacle 122 has a substantially circular cross section. The receptacle 122 is open for access on one end, toward the front surface 116 of the laundry appliance 100, and may include a rear base wall 125 toward the rear of the drum 120. The outer surface 126 of the drum wall 124 includes the surface of the curved portion 123, which defines the opening 117, and the surface of the rear base wall 125 which forms the back of the receptacle (*i.e.,* the base of the cylindrical drum). The drum 120 may be mounted within the appliance body 110 in any suitable manner, such as, for example, via front and rear mounting panels 130, 140.

The laundry appliance 100 includes additional component assemblies as required for operation of the laundry appliance, such as, but not limited to a motor assembly 150 for rotating the drum, for operating a pump for providing water into and/or removing water from the receptacle 122 of the drum 120, or for operating a blower for providing air into and/or removing air from the receptacle 122 of the drum 120. The drum 120 is rotatable about a central axis Z via a motor which is connected to a drive belt 160 on the outer surface 126 of the drum wall 124. Rotation of the drum 120 tumbles the laundry items to aid in drying (or washing) of the laundry items within the receptacle 122. The laundry appliance also includes a controller 180 for operating the motor and/or the blower according to the user input at the control panel 111. The motor assembly 150 includes a sensor-controlled motor (not shown) and a sensor (not shown) for detecting humidity, housed by a cover 170. The humidity information from the sensor is provided to the controller 180 to control operation of the components of the laundry appliance 100 per the program and state of laundry items in the receptacle 122.

The cover 170 forms a housing to protect a component assembly of the sensor and sensor-controlled motor (or any sensor-controlled or, interchangeably, sensor-driven component as part of the corresponding component assembly housed within the cover 170) from the external environment (*e.g*., debris from entering the motor assembly 150). The cover 170 has an outer surface facing the external environment (*i.e.,* the interior of the appliance 100), and an inner surface facing the sensor and sensor-controlled motor. The cover 170 may be sized according to the components, and may include openings for features to pass through the cover 170. The cover 170 may also be configured to releasably connect to a surface within the appliance 100 to house the motor assembly 150.

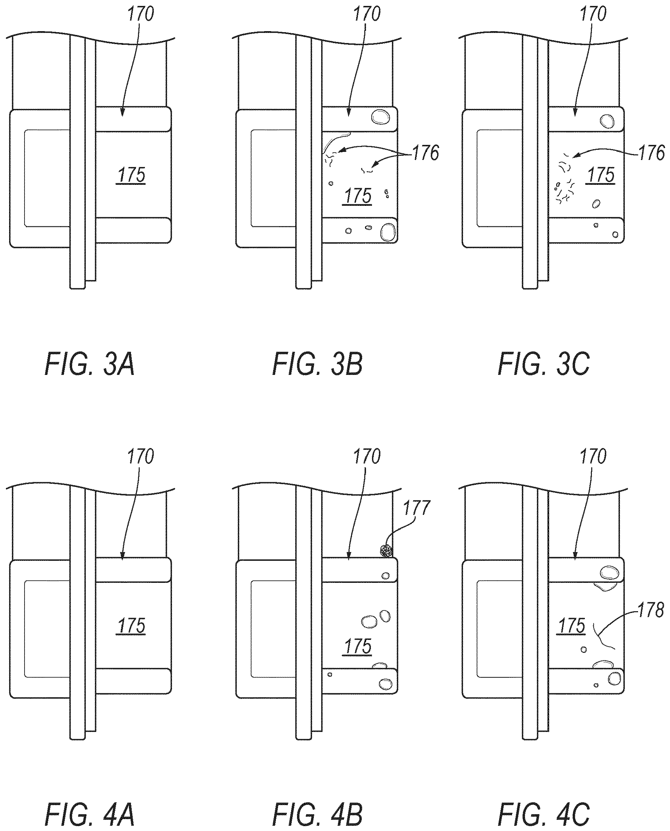

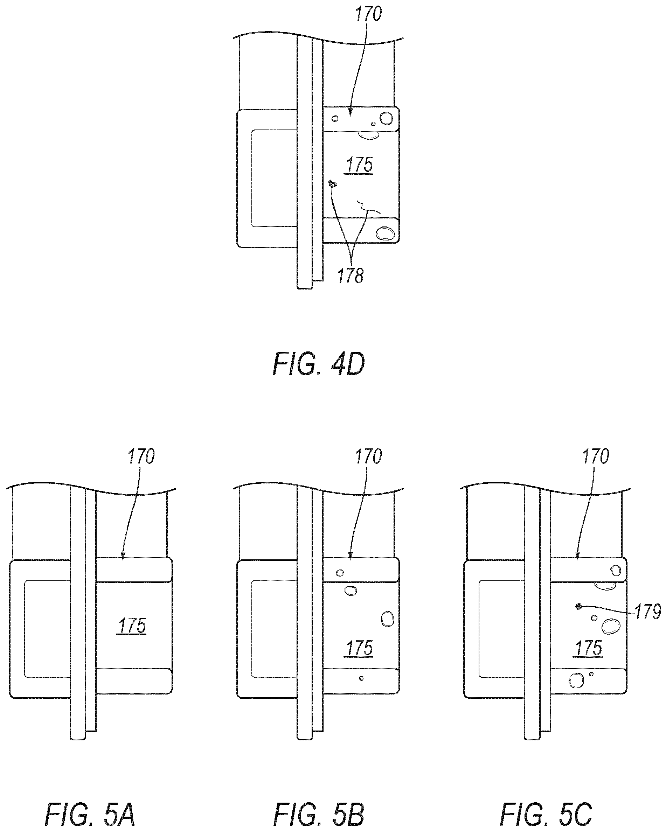

In at least one embodiment, as shown in the examples depicted in FIGS. 4A-D, and 5A-C, the cover 170 may include a functionalized superhydrophobic coating thereon on the outer surface and/or the inner surface (not shown) to prevent moisture from entering the housing or reaching the sensor and sensor-controlled motor. The functionalized superhydrophobic coating has a minimum water contact angle of at least 125 degrees in some embodiments, 135 degrees in other embodiments, and 150 degrees in yet further embodiments. In some embodiments, advantageously, the contact angle may be at least 145 degrees, and in further embodiments, 145 to 165 degrees. The contact angle being high (*e.g.,* at least 145 degrees provides a repulsive effect to water (and thus contaminants in the water) to prevent water from entering the cover 170. The functionalized superhydrophobic coating may have various properties, including, but not limited to, being insulative (*e.g*., not conductive), having a transparency of greater than 75%, a requisite level of flexibility/elasticity such that the surface of the cover 170 is uniformly covered (including covering surface features formed by the injection molding of the cover), and may be a thin film coating (*e.g.*, having an overall total thickness of less than 5 mm). Advantageously, in embodiments where the coating is a thin film coating, the overall thickness of a thin film coating may be 1 nm to 500 nm, or in further embodiments, 3 nm to 450 nm. The uniformity of the coating may be based on the thickness of the coating over the surface varying by under 0.5 mm, and for thin film coatings, the uniformity may vary by under 20 nm or under 15 nm. The functionalized superhydrophobic coating may be on the outer surface and/or the inner surface in any suitable number of layers to prevent moisture from entering the housing. For example, the functionalized superhydrophobic coating may include 5 or more individual layers of the coating forming the overall coating based on the coating application.

The functionalized superhydrophobic coating may be a polymer coating including a polymer matrix and a nanomaterial component that is processed to functionalize the coating and/or nanomaterials in the coating. The nanomaterial component may be an organic or inorganic nanomaterial. In certain embodiments, the nanomaterial may be a carbon based or graphene nanomaterial, having a suitable structure such as, but not limited to, a spherical, tubular, hollow, cylindrical, flake, flat, or irregular shaped structure as some non-limiting examples. The nanomaterial particles may have an average size (taken along the largest dimension) of 1 to 500 nm. In some embodiments, the nanomaterial may be nanotubes or hollow nanospheres for absorbing moisture therein. The inclusion of nanomaterials in the coating allows for a high contact angle (e.g., of at least 145 to be achieved in embodiments where the coating is a thin film coating having a thickness of 1 nm to 500 nm, or 3 nm to 450 nm, which allows the coating to conform to surface features of the cover 170 and have the appropriate flexing while sustaining a contact angle that can repel water to prevent it from entering the cover 170.

Functionalization of the coating may be via surface modification of the nanomaterial component to enhance characteristics of the nanomaterial. These surface modifications may include adding or depositing chemical functional groups to the surface, or altering the surface roughness. As functionalized, the nanomaterial or surface-modified nanomaterial may facilitate moisture absorption in addition to the super hydrophobicity of the overall polymer matrix. In another example, the functionalization may improve the stretchability/elasticity of the coating to better coat the surface(s) of the cover 170 (e.g., over contours defined on the surface(s)).

The functionalized superhydrophobic coating may be applied to the surface(s) of the cover 170 in any suitable manner, including but not limited to, spray coating, dip coating, or other suitable deposition method for functionalized coatings.

With reference to the Figures, FIGS. 3A-C, FIGS. 4A-D, and FIGS. 5A-C show various examples a cover 170 subject to submersion in water with particles such as lint dispersed therein. In the examples shown in the Figures, the cover 170 is dipped up to ten times in the water with particles to observe whether lint adheres to the surface. For example, in FIGS. 3A-C, a conventional cover 170 has an uncoated outer surface 175. FIG. 3A illustrates the baseline cover 170 prior to submersion. After 5 submersions in the water with particles, as shown in FIG. 3B, small lint fibers 176 begin to stick to the outer surface 175. After 10 submersions in the water with particles, as shown in FIG. 3C, the lint fibers 176 begin to accumulate on the outer surface 175.

In the example shown in FIGS. 4A-D, the cover 170 is coated on the outer surface 175 with at least one layer of functionalized superhydrophobic coating. FIG. 4A illustrates the baseline cover 170 with the outer surface 175 coated, prior to submersion. After 1 submersion in water with particles such as, for example, lint, as shown in FIG. 4B, a small lint ball 177 is shown on the outer surface 175. After 5 submersions in the water with particles, as shown in FIG. 4C, a single fiber 178 is on the outer surface 175. After 10 submersions in the water with particles, as shown in FIG. 4D, discrete lint fibers 178 are on the outer surface 175, however there are less than the accumulated lint fibers 176 of the uncoated pump cover of FIGS. 3A-C.

In the example shown in FIGS. 5A-C, the cover 170 is coated on the outer surface 175 with at least one layer of functionalized superhydrophobic coating, and coated on the inner surface (not shown) with at least one layer of functionalized superhydrophobic coating. FIG. 5A illustrates the baseline cover 170 with the inner surface (not shown) and with the outer surface 175 coated, prior to submersion. After 2 submersions in water with particles, such as, for example, lint, as shown in FIG. 5B, no lint is on the outer surface 175. After 5 submersions in the water with particles, as shown in FIG. 5C, only a small ball of lint 179 is on the outer surface 175. As such, less lint accumulates on the outer surface 175 in the example of FIGS. 5A-C than the uncoated cover of FIGS. 3A-C.

Although the examples of FIGS. 4A-D and FIGS. 5A-C show the outer surface coated, it is contemplated that only the inner surface may be coated in other embodiments to achieve the affect of the coating, and the depiction of the outer surface being coated is shown as examples, and is not intended to be limiting.

Thus, a home appliance includes a cover for a component assembly that includes a functionalized superhydrophobic coating thereon on the outer surface and/or inner surface to prevent moisture from attacking components within the component assembly.

Except where otherwise expressly indicated, all numerical quantities in this description and in the claims are to be understood as modified by the word "about" in describing the broader scope of this invention. The term "substantially," "generally," or "about" may be used herein and may modify a value or relative characteristic disclosed or claimed. In such instances, "substantially," "generally," or "about" may signify that the value or relative characteristic it modifies is within ± 0%, 0.1%, 0.5%, 1%, 2%, 3%, 4%, 5% or 10% of the value or relative characteristic. Practice within the numerical limits stated is generally preferred. Also, unless expressly stated to the contrary, the description of a group or class of materials by suitable or preferred for a given purpose in connection with the invention implies that mixtures of any two or more members of the group or class may be equally suitable or preferred.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A home appliance (100) comprising:
a component assembly (150) including a sensor and a sensor-driven component;
a cover (170) forming a housing for the component assembly, the cover (170) having an inner surface facing the sensor and the sensor-driven component, and an outer surface (175) opposite to the inner surface; and
a functionalized superhydrophobic coating on the outer surface (175) to prevent moisture from attacking components within the component assembly (150), the functionalized superhydrophobic coating having a water contact angle thereon of at least 145 degrees.

2. The home appliance (100) of claim 1, further comprising a second functionalized superhydrophobic coating on the inner surface.

3. The home appliance (100) of claims 1 or 2, wherein the functionalized superhydrophobic coating includes a polymer matrix and a functionalized nanomaterial dispersed therein.

4. The home appliance (100) of claim 3, wherein the functionalized nanomaterial is a surface-modified nanomaterial to enhance absorption and/or stretchability of the functionalized superhydrophobic coating.

5. The home appliance (100) of claims 3 or 4, wherein the functionalized nanomaterial is a carbon based or graphene nanomaterial having a spherical, tubular, hollow, cylindrical, flake, flat, or irregular shaped structure.

6. The home appliance (100) of any of claims 3 to 5, wherein the functionalized nanomaterial includes particles having an average size, taken along a largest dimension, of 1 to 500 nm.

7. The home appliance (100) of any of the preceding claims, wherein the component assembly (150) is a motor assembly or a pump assembly.

8. The home appliance (100) of any of the preceding claims, wherein the functionalized superhydrophobic coating includes one or more layers of the functionalized superhydrophobic coating.

9. The home appliance (100) of any of the preceding claims, wherein the functionalized superhydrophobic coating is less than 5 mm thick.

10. The home appliance (100) of any of the preceding claims, wherein the functionalized superhydrophobic coating is a thin film coating having a thickness of 3 nm to 450 nm.

11. A method comprising:
providing a component assembly (150) including a sensor and a sensor-driven component; and a cover (170) forming a housing for the component assembly (150); and
applying a functionalized superhydrophobic coating on at least one of an outer surface (175) of the cover (170) and an inner surface of the cover to prevent moisture from attacking components within the component assembly (150),
wherein the functionalized superhydrophobic coating includes a polymer matrix and a functionalized nanomaterial dispersed therein, and forms a coated surface having a water contact angle thereon of at least 145 degrees.

12. The method of claim 11, wherein the applying includes applying one or more layers of the functionalized superhydrophobic coating.

13. The method of claims 11 or 12, further comprising functionalizing a superhydrophobic coating including a polymer matrix and a nanomaterial component to form the functionalized superhydrophobic coating.

14. The method of claim 13, wherein the functionalizing is via surface modification of the nanomaterial component.

15. The method of any of claims 11 to 14, wherein the applying is via spray coating or dip coating.
